# EUROPEAN PATENT APPLICATION

(11) **EP 4 035 909 A1**
(43) Date of publication of application: **03.08.2022**
(21) Application number: 22154063.6
(22) Date of filing: 28.01.2022
(51) Int. Cl.: B60C 9/20, B60C 1/00

(54) **PNEUMATIC TIRE**

(30) Priority: 02.02.2021 JP 2021014920
(71) Applicant: The Yokohama Rubber Co., Ltd., Tokyo 105-8685 (JP)
(72) Inventor: SUZUKI, Yohsuke, Hiratsuka-shi, 2548601 (JP)
(74) Representative: Schindelmann, Peter

(57) **Abstract**

Provided is a pneumatic tire capable of improving the durability of the tire by arranging belt cover layers and improving fuel efficiency by devising a cord structure of steel cords constituting a belt layer. In the pneumatic tire, a tread portion (1) includes a belt layer (7) made of a steel cord (10) covered with a rubber composition on an outer side in a tire radial direction of a carcass layer (4) and a belt cover layer (8) made of an organic filament cord covered with a rubber composition on an outer side in the tire radial direction of the belt layer (7). The steel cord (10) has a structure in which two sheath filaments having a diameter of 0.32 mm ± 0.01 mm are spirally twisted on an outer circumferential side of two untwisted core filaments having a diameter of 0.32 mm ± 0.01 mm, and the belt cover layer (8) is disposed so as to cover an entire width of the belt layer (7).

## Description

### Technical Field

The present invention relates to a pneumatic tire, and particularly relates to a pneumatic tire capable of improving the durability of the tire by arranging belt cover layers and improving fuel efficiency by devising a cord structure of steel cords constituting a belt layer.

### Background Art

In a pneumatic tire, it has been proposed to dispose a belt cover layer on the outer side of the belt layer in the tire radial direction for the purpose of improving durability (see, for example, Patent Document 1). However, when the belt cover layer constitutes, for example, two edge cover layers that cover only the end portion of the belt layer, the fuel efficiency of the tire can be improved, while it is difficult to sufficiently improve the durability of the tire. Depending on the arrangement of the belt cover layer, there is a problem that the durability and fuel efficiency of the tire cannot be improved at the same time.

Further, in a pneumatic tire, there is a problem that the durability and fuel efficiency of the tire cannot be improved at the same time depending on the cord structure (twisted structure) of the steel cord constituting the belt layer. Furthermore, the durability or fuel efficiency of the tire may be deteriorated depending on the thickness of the wire strand constituting the steel cord.

### Citation List

### Patent Literature

[Patent Document 1] JP 2009-56938 A

### Summary of Invention

### Technical Problem

An object of the present invention is to provide a pneumatic tire capable of improving the durability of a tire by arranging a belt cover layer and improving fuel efficiency by devising the cord structure of the steel cord constituting the belt layer.

### Solution to Problem

In order to achieve the above object, a pneumatic tire according to an embodiment of the present invention is a pneumatic tire including a tread portion that includes a belt layer made of a steel cord covered with a rubber composition on an outer side in a tire radial direction of a carcass layer and a belt cover layer made of an organic filament cord covered with a rubber composition on an outer side in the tire radial direction of the belt layer, the steel cord having a structure in which two sheath filaments having a diameter of 0.32 mm ± 0.01 mm are spirally twisted on an outer circumferential side of two core filaments that are untwisted, having a diameter of 0.32 mm ± 0.01 mm, and the belt cover layer being disposed so as to cover an entire width of the belt layer.

### Advantageous Effects of Invention

In the present invention, in a pneumatic tire in which a tread portion includes a belt layer and a belt cover layer, since the belt cover layer is disposed so as to cover the entire width of the belt layer, the reinforcing effect on the tread portion can be enhanced. Accordingly, the durability of the tire can be improved. The steel cord constituting the belt layer has a structure in which two sheath filaments having a diameter of 0.32 mm ± 0.01 mm are spirally twisted on an outer circumferential side of two untwisted core filaments having a diameter of 0.32 mm ± 0.01 mm. Therefore, the fuel efficiency of the tire can be improved due to the cord structure (twisted structure), and the durability and the fuel efficiency of the tire can be improved at the same time due to the wire strand diameter. As a result, in the present invention, the durability and fuel efficiency of the tire can be improved in a well-balanced manner.

In the pneumatic tire according to an embodiment of the present invention, preferably, a ratio (Sb/Sc) of a blended amount of sulfur (Sb) with respect to 100 parts by mass of rubber in a belt rubber composition constituting the belt layer and a blended amount of sulfur (Sc) with respect to 100 parts by mass of rubber in a belt cover rubber composition constituting the belt cover layer is 2.0 to 3.0, and a ratio (Mb/Mc) of 100% tensile stress (Mb) of the belt rubber composition and 100% tensile stress (Mc) of the belt cover rubber composition is 1.5 to 2.5. Accordingly, the durability and fuel efficiency of the tire can be improved in a well-balanced manner.

Preferably, a belt rubber composition constituting the belt layer is made by blending 0.1 to 1.5 parts by mass of cobalt boron neodecanoate and 4.5 to 7.0 parts by mass of sulfur with respect to 100 parts by mass of diene rubber containing natural rubber. Accordingly, the adhesiveness between the steel cord and the rubber composition can be enhanced in the belt layer, which contributes to the improvement of the durability of the tire.

Preferably, the belt rubber composition is made by blending 0.5 to 3.0 parts by mass of a phenolic resin and 0.5 to 5.0 parts by mass of a curing agent with respect to 100 parts by mass of the diene rubber, and a dynamic storage modulus E' at 20°C of the belt rubber composition is 13 to 18 MPa. Accordingly, the hardness, the tensile elongation at break and the adhesiveness to the steel cord of the belt rubber composition can be improved, and the durability of the tire can be improved.

Preferably, the tire is a light truck tire used under the condition of an air pressure of 350 kPa or more. When the present invention is applied to such a tire, the effect of improving the durability and fuel efficiency of the tire is remarkable.

### Brief Description of Drawings

FIG. 1 is a meridian cross-sectional view illustrating a pneumatic tire according to an embodiment of the present invention.
FIG. 2 is an explanatory view schematically illustrating a cord structure of a steel cord constituting the belt layer of the pneumatic tire of FIG. 1.

### Description of Embodiments

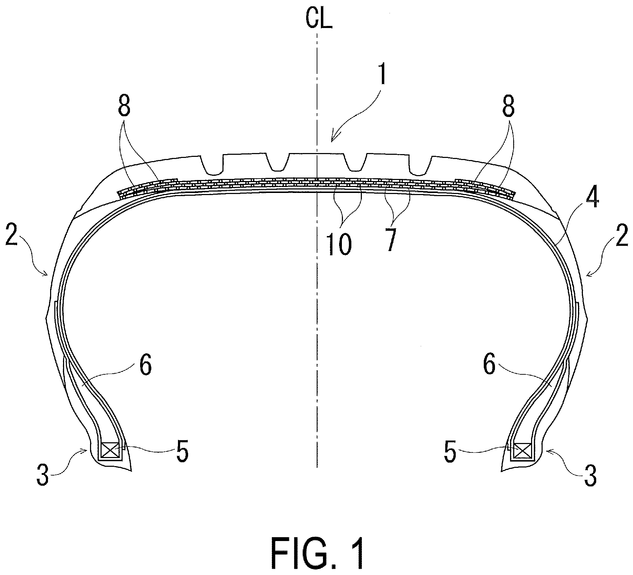

Configurations of embodiments of the present invention will be described in detail below with reference to the accompanying drawings. FIG. 1 illustrates a pneumatic tire according to an embodiment of the present invention. As illustrated in FIG. 1, a pneumatic tire according to an embodiment of the present invention includes a tread portion 1 extending in the tire circumferential direction and having an annular shape, a pair of sidewall portions 2, 2 respectively disposed on both sides of the tread portion 1, and a pair of bead portions 3, 3 each disposed on an inner side of the sidewall portions 2 in a tire radial direction.

A carcass layer 4 is mounted between the pair of bead portions 3, 3. The carcass layer 4 includes a plurality of reinforcing cords extending in the tire radial direction and is folded back around a bead core 5 disposed in each of the bead portions 3 from a tire inner side to a tire outer side. A bead filler 6 having a triangular cross-sectional shape and formed of a rubber composition is disposed on the outer circumference of the bead core 5.

On the other hand, at least two belt layers 7 (two layers in FIG. 1) are embedded on the tire outer circumferential side of the carcass layer 4 in the tread portion 1. The belt layers 7 include a plurality of reinforcing cords that are inclined with respect to the tire circumferential direction, and the reinforcing cords are disposed between layers so as to intersect each other. In the belt layers 7, the inclination angle of the reinforcing cords with respect to the tire circumferential direction is set to fall within a range of from 10° to 40°, for example.

At least one belt cover layer 8 (two layers in FIG. 1) formed by arranging reinforcing cords at an angle of, for example, 5° or less with respect to the tire circumferential direction is disposed on the tire outer circumferential side of the belt layer 7 for the purpose of improving the durability of the tire. In FIG. 1, the belt cover layer 8 located on the inner side in the tire radial direction forms a full cover layer covering the entire width of the belt layer 7, and the belt cover layer 8 located on the outer side in the tire radial direction constitutes an edge cover layer covering only the end portion of the belt layer 7. In the embodiment of FIG. 1, an example in which one full cover layer and one edge cover layer are disposed is illustrated, but the present invention is not limited to this, and only the full cover layer may be disposed. Organic filament cords such as nylon and aramid are preferably used as the reinforcing cords of the belt cover layer 8. The reinforcing cord of the belt cover layer 8 is covered with a rubber composition.

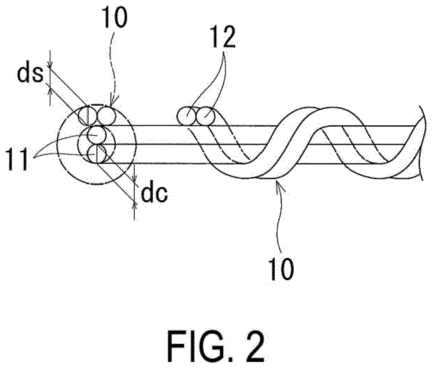

In the pneumatic tire, a steel cord 10 illustrated in FIG. 2 is used as the reinforcing cord of the belt layer 7. As illustrated in FIG. 2, the steel cord 10 includes two core filaments 11 that are untwisted and bunched, and two sheath filaments 12 that are spirally twisted on the outer circumferential side of the core filament 11. That is, the steel cord 10 has a 2 + 2 structure. The diameter dc (wire strand diameter) of the core filament 11 and the diameter ds (wire strand diameter) of the sheath filament 12 are 0.32 mm ± 0.01 mm, respectively. The steel cord 10 is covered with a rubber composition described later.

In the pneumatic tire described above, since the belt cover layer 8 is disposed so as to cover the entire width of the belt layer 7, the reinforcing effect of the tread portion 1 can be enhanced. Accordingly, the durability of the tire can be improved. The steel cord 10 constituting the belt layer 7 has a structure in which the two sheath filaments 12 having the diameter ds of 0.32 mm ± 0.01 mm are spirally twisted on the outer circumferential side of the two untwisted core filaments 11 having the diameter dc of 0.32 mm ± 0.01 mm. Therefore, the fuel efficiency of the tire can be improved due to the cord structure (twisted structure), and the durability and fuel efficiency of the tire can be improved at the same time due to the wire strand diameter. As a result, in the present invention, the durability and fuel efficiency of the tire can be improved in a well-balanced manner.

Here, when the belt cover layer is composed of only the edge cover layer, the fuel efficiency of the tire can be improved, but the durability of the tire cannot be sufficiently improved. Therefore, in the present invention, it is necessary that the belt cover layer 8 includes the full cover layer. Further, even when the steel cord constituting the belt layer has a 2 + 2 structure, if the wire strand diameter of the steel cord deviates from the range specified in the present invention and is excessively small, the durability of the tire cannot be sufficiently improved. On the contrary, if the wire strand diameter of the steel cord deviates from the range specified in the present invention and is excessively large, the fuel efficiency of the tire cannot be sufficiently improved. Therefore, in the present invention, a desired effect can be obtained by setting the steel cord 10 constituting the belt layer 7 to have a 2 + 2 structure and setting the wire strand diameter thereof within a specific range.

In the pneumatic tire, the ratio (Sb/Sc) of the blended amount of sulfur (Sb) with respect to 100 parts by mass of the diene rubber in the belt rubber composition constituting the belt layer 7 to the blended amount of sulfur (Sc) with respect to 100 parts by mass of the diene rubber in the belt cover rubber composition constituting the belt cover layer 8 may preferably be 2.0 to 3.0, and more preferably 2.2 to 2.7. If the ratio of the blended amount of sulfur (Sb/Sc) is less than 2.0, the 100% tensile stress (Mb) of the belt rubber composition may be insufficient, and the durability of the tire may be insufficient. On the other hand, if the ratio of the blended amount of sulfur (Sb/Sc) exceeds 3.0, the durability of the tire may decrease.

At that time, the ratio (Mb/Mc) of the 100% tensile stress (Mb) of the belt rubber composition to the 100% tensile stress (Mc) of the belt cover rubber composition is 1.5 to 2.5 and may preferably be 1.6 to 2.45, and more preferably 1.7 to 2.4. If the ratio of the 100% tensile stress (Mb/Mc) is less than 1.5, the pull-out force of the rubber composition at the time of pulling out wire decreases, and the durability of the tire is insufficient. On the other hand, when the ratio of the 100% tensile stress (Mb/Mc) exceeds 2.5, the aging characteristics of the rubber composition are inferior and the durability of the tire is insufficient. The 100% tensile stress ratio (Mb/Mc) of the belt rubber composition and the belt cover rubber composition can be increased or decreased depending on the composition of the belt rubber composition and the belt cover rubber composition and the vulcanization conditions such as temperature and time. In the present specification, the 100% tensile stress is the tensile stress when 100% deformed in the tensile test in accordance with JIS K 6251.

As described above, the ratio (Sb/Sc) of the blended amount of sulfur (Sb) with respect to 100 parts by mass of rubber in the belt rubber composition constituting the belt layer 7 to the blended amount of sulfur (Sc) with respect to 100 parts by mass of rubber in the belt cover rubber composition constituting the belt cover layer 8 is 2.0 to 3.0, and the ratio (Mb/Mc) of the 100% tensile stress (Mb) of the belt rubber composition and the 100% tensile stress (Mc) of the belt cover rubber composition is 1.5 to 2.5. Therefore, the durability and the fuel efficiency of the tire can be improved in a well-balanced manner.

In the pneumatic tire, the belt rubber composition constituting the belt layer 7 may have a composition described later. The belt rubber composition may be formed by blending diene rubber containing natural rubber with cobalt boron neodecanoate and sulfur.

The diene rubber constituting the belt rubber composition always contains natural rubber. The content of the natural rubber is preferably 80 mass% or more, more preferably 90 to 100 mass%, in 100 mass% of the diene rubber. If the content of the natural rubber is less than 80 mass%, the adhesiveness (for example, the crossply peel strength) to the steel cord 10 is lowered, and it is difficult to sufficiently improve the durability of the tire.

As the diene rubber constituting the belt rubber composition, a diene rubber other than natural rubber can be blended. Examples of other diene rubbers include isoprene rubber, butadiene rubber, styrene-butadiene rubber, and acrylonitrile-butadiene rubber. Of these, isoprene rubber, butadiene rubber, and styrene-butadiene rubber are preferable. These diene rubbers may be used solely or as a desirable blend thereof. The content of the other diene rubber is preferably 20 mass% or less, more preferably 0 to 10 mass%, in 100 mass% of the diene rubber.

The belt rubber composition can have high adhesiveness to the steel cord 10 by blending cobalt boron neodecanoate. Cobalt boron neodecanoate is a compound represented by the following general formula (1), and the blended amount thereof is preferably 0.1 to 1.5 parts by mass with respect to 100 parts by mass of the diene rubber constituting the belt rubber composition, and more preferably, is more than 1.0 part by mass and 1.5 parts by mass or less. If the blended amount of cobalt boron neodecanoate is less than 0.1 parts by mass, the initial adhesiveness and durable adhesiveness to the steel cord 10 cannot be sufficiently increased, and the adhesiveness between the steel cord 10 and the belt rubber composition is reduced. On the other hand, if the blended amount of cobalt boron neodecanoate exceeds 1.5 parts by mass, the durability of the tire tends to decrease. Further, cobalt boron neodecanoate and other fatty acid cobalt salts can be blended and used. Examples of other fatty acid cobalt salts include cobalt stearate and cobalt naphthenate.

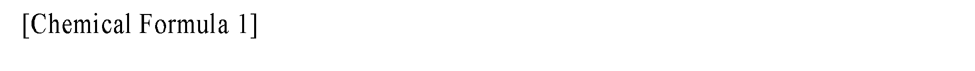

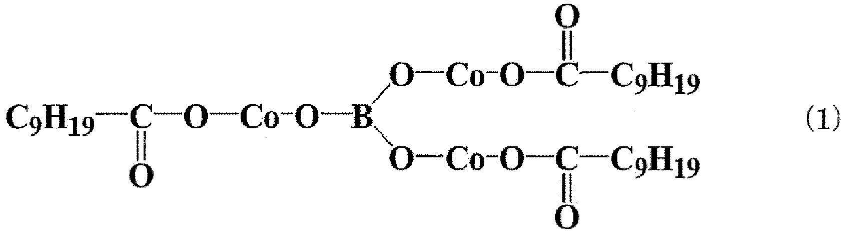

The cobalt boron neodecanoate preferably has a cobalt content of 18 to 26 mass%, and more preferably 20 to 24 mass%. Examples of cobalt boron neodecanoate include Manobond C22.5 and Manobond 680C available from Rhodia, CoMend A and CoMend B available from Shephered, and DICNATE NBC-2 available from DIC CORPORATION.

In the belt rubber composition, sulfur and a vulcanization accelerator may be added to the diene rubber. The blended amount of sulfur may preferably be 4.5 to 7.0 parts by mass, and more preferably 5.0 to 6.5 parts by mass with respect to 100 parts by mass of the diene rubber constituting the belt rubber composition. If the blended amount of sulfur is less than 4.5 parts by mass, the durability of the tire will be insufficient. If the blended amount of sulfur exceeds 7.0 parts by mass, the durability of the tire is rather lowered. In the present specification, the blended amount of sulfur is the net blended amount of sulfur blended for vulcanization and/or sulfur contained in the vulcanizing agent.

As described above, the belt rubber composition constituting the belt layer 7 is obtained by blending 0.1 to 1.5 parts by mass of cobalt boron neodecanoate and 4.5 to 7.0 parts by mass of sulfur with respect to 100 parts by mass of diene rubber containing natural rubber. Therefore, the adhesiveness between the steel cord 10 and the rubber composition in the belt layer 7 can be enhanced, which contributes to the improvement of tire durability.

In the present invention, the vulcanization accelerator is not particularly limited, but a sulfenamide-based vulcanization accelerator is preferable. Examples of the sulfenamide-based vulcanization accelerator include N,N-dicyclohexyl-1,3-benzothiazole-2-sulfenamide (DCBS), N-cyclohexyl-2-benzothiazolesulfenamide (CBS), and N-oxydiethylene-2-benzothiazolesulfenamide (OBS), N-(tert-butyl)benzothiazole-2-sulfenamide (TBBS). These sulfenamide-based vulcanization accelerators can be blended solely or in combination of a plurality of these. In particular, N,N-dicyclohexyl-1,3-benzothiazole-2-sulfenamide (DCBS) and/or N-(tert-butyl)benzothiazole-2-sulfenamide (TBBS) are preferably blended.

The blended amount of the vulcanization accelerator may preferably be 0.1 to 1.5 parts by mass, and more preferably 0.2 to 1.2 parts by mass with respect to 100 parts by mass of the diene rubber. If the blended amount of the vulcanization accelerator is less than 0.1 parts by mass, the durability of the tire may decrease. On the other hand, if the blended amount of the vulcanization accelerator exceeds 1.5 parts by mass, the adhesiveness at the time of deterioration may decrease.

In the above-mentioned pneumatic tire, the dynamic storage modulus E' at a dynamic strain of 2% and 20°C of the belt rubber composition may preferably be 13 to 18 MPa, more preferably 13.5 to 17.5 MPa, and most preferably 14 to 17 MPa. If the dynamic storage modulus E' is less than 13 MPa, the adhesive performance to the steel cord 10 is inferior, and the durability of the tire is insufficient. On the other hand, if the dynamic storage modulus E' exceeds 18 MPa, the rubber attachment at the time of pulling out wire decreases, and the durability of the tire is insufficient. The dynamic storage modulus E' can be increased or decreased depending on the composition of the rubber composition and the vulcanization conditions such as temperature and time. In the present specification, the dynamic storage modulus E' is measured using a viscoelastic spectrometer under the conditions of a frequency of 20 Hz, an initial strain of 10%, a dynamic strain of ±2%, and a temperature of 20°C in accordance with JIS K 6394.

At that time, the belt rubber composition can be blended with a phenolic resin and a curing agent thereof. By blending the phenolic resin and the curing agent, the hardness, the tensile elongation at break and the adhesive performance to the steel cord 10 of the rubber composition can be improved, and excellent durability of the tire can be obtained.

Examples of the phenolic resin include cresol resins, resorcin resins, alkylphenol resins, and modified phenol resins. Examples of the modified phenol resin include cashew-modified phenol resins, oil-modified phenol resins, epoxy-modified phenol resins, aniline-modified phenol resins, and melamine-modified phenol resins.

The cresol resin is a compound obtained by reacting cresol with formaldehyde, and a compound using m-cresol is particularly suitable. Examples of the cresol resin include Sumikanol 610 available from Taoka Chemical Co., Ltd.

The resorcin resin is a compound obtained by reacting resorcin with formaldehyde, and examples thereof include Penacolite B-18-S, B-19-S, B-20-S, and B-21-S available from Sumitomo Chemical Advanced Technologies LLC. Further, as the resorcin resin, a modified resorcin resin may be used, and examples thereof include resorcin resins modified with alkylphenol and the like, and examples thereof include resorcin-alkylphenol-formalin copolymers.

The cashew-modified phenol resin is a phenol resin modified using cashew oil, and examples thereof include SUMILITERESIN PR-YR-170 and PR-150 available from Sumitomo Bakelite Co., Ltd., and PHENOLITE A4-1419 available from DIC CORPORATION. The phenol resin is an unmodified resin obtained by reacting phenol with formaldehyde, and examples thereof include Sumikanol 620 available from Taoka Chemical Co., Ltd.

The blended amount of the phenolic resin may preferably be 0.5 to 3.0 parts by mass, more preferably 0.7 to 2.0 parts by mass with respect to 100 parts by mass of the diene rubber constituting the belt rubber composition. If the blended amount of the phenolic resin is less than 0.5 parts by mass, the dynamic storage modulus E' may be lowered, the adhesiveness to the steel cord 10 may be lowered, and the durability of the tire may be insufficient. On the other hand, if the blended amount of the phenolic resin exceeds 3.0 parts by mass, the durability of the tire may be rather lowered.

Examples of the curing agent for curing the above-mentioned phenolic resin include hexamethylene tetramine, hexamethoxymethyl melamine, hexamethoxymethylol melamine, pentamethoxymethyl melamine, hexaethoxymethyl melamine, polymers of para-formaldehyde, and N-methylol derivatives of melamine. These methylene donors can be used solely or as a desirable blend thereof.

Examples of hexamethylene tetramine include SANCELER HT-PO available from Sanshin Chemical Industry Co., Ltd. Examples of the hexamethoxymethylol melamine (HMMM) include CYREZ 964RPC available from CYTEC INDUSTRIES. Examples of the pentamethoxymethyl melamine (PMMM) include Sumikanol 507AP available from Taoka Chemical Co., Ltd.

The blended amount of the curing agent may preferably be 0.5 to 5.0 parts by mass, more preferably 0.7 to 4.0 parts by mass with respect to 100 parts by mass of the diene rubber constituting the belt rubber composition. If the blended amount of the curing agent is less than 0.5 parts by mass, the dynamic storage modulus E' may be lowered, the adhesiveness to the steel cord 10 may be lowered, and the durability of the tire may be insufficient. If the blended amount of the curing agent exceeds 5.0 parts by mass, the durability of the tire may be rather lowered.

As described above, the belt rubber composition is made by blending 0.5 to 3.0 parts by mass of a phenolic resin and 0.5 to 5.0 parts by mass of a curing agent with respect to 100 parts by mass of diene rubber, and the dynamic storage modulus E' at 20°C of the belt rubber composition is 13 to 18 MPa. Therefore, the hardness, the tensile elongation at break, and the adhesiveness to the steel cord 10 of the belt rubber composition can be improved, and the durability of the tire can be improved.

In the present invention, carbon black, silica, clay, talc, mica, calcium carbonate and the like can be discretionary blended as the inorganic filler. In particular, carbon black and silica are preferable. By blending carbon black, the dynamic storage modulus E' can be increased. By blending silica, tan8 at 60°C can be reduced.

The rubber composition can be blended with various additives generally used in rubber compositions for a tire, such as vulcanization accelerator aids, anti-aging agents, peptizing agents, various oils, and plasticizers. Such additives can be kneaded by a general method to form a rubber composition, which can be used for vulcanization or crosslinking. Blended amounts of these additives may be any known amount, so long as the objects of the present invention are not hindered. The rubber composition can be produced by mixing each of the above components using a general rubber kneading machine, for example, a Banbury mixer, a kneader, a roll, or the like.

The pneumatic tire according to an embodiment of the present invention is not particularly limited, but may be, for example, a light truck tire used under the condition of an air pressure of 350 kPa or more. When the present invention is applied to such a tire, the effect of improving the durability and fuel efficiency of the tire is remarkable.

### Examples

Pneumatic tires of Conventional Example 1, Comparative Examples 1 to 3 and Examples 1 to 4 were manufactured in which the tires have a size of 195/80R15, and a tread portion includes a belt layer made of a steel cord covered with a rubber composition on the outer side in the tire radial direction of the carcass layer and a belt cover layer made of an organic filament cord covered with a rubber composition on the outer side in the tire radial direction of the belt layer, and in which the cord structure of the steel cord, the diameter of the core filament, the diameter of the sheath filament, the number of full cover layers, the number of edge cover layers, the ratio Sb/Sc, and the ratio Mb/Mc are set as shown in Table 1.

Regarding the cord structure of the steel cord in Table 1, "2/5" indicates a structure in which two core filaments and five sheath filaments are twisted at the same time, and "2 + 2" indicates a structure in which two sheath filaments are spirally twisted on the outer circumferential side of two untwisted core filaments.

In Table 1, the ratio of the blended amount of sulfur (Sb) with respect to 100 parts by mass of rubber in the belt rubber composition constituting the belt layer to the blended amount of sulfur (Sc) with respect to 100 parts by mass of rubber in the belt cover rubber composition constituting the belt cover layer is shown in the column of "ratio Sb/Sc", and the ratio of the 100% tensile stress (Mb) of the belt rubber composition to the 100% tensile stress (Mc) of the belt cover rubber composition is shown in the column of "ratio Mb/Mc". The 100% tensile stress is the tensile stress when 100% deformed in the tensile test in accordance with JIS K 6251.

For each test tire, the durability and fuel efficiency of the tire were evaluated by the following test method, and the results are also shown in Table 1.

### Durability:

Each test tire was mounted on a wheel having a rim size of 15×5.5J, inflated with a gas having an oxygen concentration of 60% to an air pressure of 450 kPa, and allowed to stand in an environment at a temperature of 70°C for 14 days. After that, the air pressure was adjusted to 350 kPa, and a running test was conducted under the condition of a speed of 60 km/h while increasing the load by 15% every 6 hours from 88% of the load specified by JATMA using an indoor drum testing machine with a drum diameter of 1707 mm and in accordance with JIS D 4230. Then, the distance traveled when the failure occurred was measured. Evaluation results are expressed as index values with Conventional Example 1 being assigned the value of 100. Larger index values indicate superior durability.

### Fuel efficiency:

Each test tire was mounted on a wheel with a rim size of 15×5.5J, and the rolling resistance was measured under the conditions of an air pressure of 450 kPa, a load of 8.13 kN, and a speed of 80 km/h in accordance with ISO28580 using an indoor drum testing machine (drum diameter: 1707.6 mm). Evaluation results are expressed as index values with Conventional Example 1 being assigned the value of 100. Smaller index values indicate lower rolling resistance and superior fuel efficiency.

**[Table 1-1]**

| | | Conventional Example 1 | Comparative Example 1 | Example 1 | Example 2 |
|---|---|---|---|---|---|
| Cord structure of steel cords | | 2/5 | 2+2 | 2+2 | 2+2 |
| | Core wire strand diameter mm | 0.20 | 0.32 | 0.32 | 0.32 |
| | Side wire strand diameter mm | 0.37 | 0.32 | 0.32 | 0.32 |
| Belt cover layer | | | | | |
| | Full cover layer Number of layers | 0 | 0 | 1 | 1 |
| | Edge cover layer Number of layers | 2 | 2 | 1 | 1 |
| Ratio Sb/Sc | | 2.5 | 2.5 | 2.5 | 2.5 |
| Ratio Mb/Mc | | 1.6 | 1.6 | 1.6 | 1.8 |
| Durability | | 100 | 96 | 102 | 109 |
| Fuel efficiency | | 100 | 95 | 97 | 94 |

**[Table 1-2]**

| | | Example 3 | Example 4 | Comparative Example 2 | Comparative Example 3 |
|---|---|---|---|---|---|
| Cord structure of steel cords | | 2+2 | 2+2 | 2+2 | 2+2 |
| | Core wire strand diameter mm | 0.32 | 0.32 | 0.28 | 0.35 |
| | Side wire strand diameter mm | 0.32 | 0.32 | 0.28 | 0.35 |
| Belt cover layer | | | | | |
| | Full cover layer Number of layers | 1 | 1 | 1 | 1 |
| | Edge cover layer Number of layers | 1 | 1 | 1 | 1 |
| Ratio Sb/Sc | | 1.6 | 3.2 | 2.5 | 2.5 |
| Ratio Mb/Mc | | 1.4 | 2.8 | 1.6 | 1.6 |
| Durability | | 111 | 101 | 95 | 105 |
| Fuel efficiency | | 99 | 93 | 93 | 104 |

As can be seen from Table 1, the tires of Examples 1 to 4 have improved tire durability and fuel efficiency in a well-balanced manner as compared with that of Conventional Example 1.

On the other hand, in Comparative Example 1, the fuel efficiency of the tire could be improved by changing the cord structure of the steel cord, but the durability of the tire deteriorated because it did not have the full cover layer. In Comparative Example 2, the durability of the tire was deteriorated since the wire strand diameters (diameters of the core filament and the sheath filament) were set to be smaller than the range specified in the present invention. In Comparative Example 3, the fuel efficiency of the tire was deteriorated since the wire strand diameters (diameters of the core filament and the sheath filament) were set to be larger than the range specified in the present invention.

Next, pneumatic tires of Conventional Example 2, Comparative Examples 4 and 5, and Examples 5 to 8 were manufactured in which the tires have a tire size of 195/80R15, and a tread portion includes a belt layer made of a steel cord covered with a rubber composition on the outer side in the tire radial direction of the carcass layer and a belt cover layer made of an organic filament cord covered with a rubber composition on the outer side in the tire radial direction of the belt layer, and in which the formulation of the belt rubber composition, the cord structure of the steel cord, the diameter of the core filament, the diameter of the sheath filament, and the E' (20°C) of the belt rubber composition are set as shown in Table 2.

The belt cover layer in Conventional Example 2 has a structure identical to that of Conventional Example 1, and each of the belt cover layer in Comparative Examples 4 and 5 and Examples 5 to 8 has a structure identical to that of Example 1.

In Table 2, the dynamic storage modulus E' of the belt rubber composition is measured at the temperature of 20°C under the conditions of an initial strain of 10%, a dynamic strain of ±2%, and a frequency of 20 Hz using a viscoelastic spectrometer available from Toyo Seiki Seisaku-sho, Ltd. in accordance with JIS K 6394. The measurement values are shown in the column of "E' (20°C) of belt rubber composition" in Table 2.

For each test tire, the durability and fuel efficiency of the tire were evaluated by a test method identical to one described above, and the results are also shown in Table 2.

The evaluation results regarding durability are expressed as index values with Conventional Example 2 being assigned the value of 100. Larger index values indicate superior durability.

The evaluation results regarding the fuel efficiency are expressed as index values with Conventional Example 2 being assigned the value of 100. Smaller index values indicate lower rolling resistance and superior fuel efficiency.

**[Table 2-1]**

| | | | Conventional Example 2 | Example 5 | Example 6 |
|---|---|---|---|---|---|
| Formulation of belt rubber composition | Natural rubber | PHR | 100 | 100 | 100 |
| | Carbon black | PHR | 60 | 60 | 60 |
| | Zinc oxide | PHR | 10 | 10 | 10 |
| | Anti-aging agent | PHR | 1 | 1 | 1 |
| | Cobalt stearate | PHR | 2 | - | - |
| | Cobalt boron neodecanoate | PHR | - | 1 | 1 |
| | Phenolic resin | PHR | - | - | 1 |
| | Curing agent | PHR | - | - | 2 |
| | Vulcanization accelerator | PHR | 0.5 | 0.5 | 0.5 |
| | Sulfur | PHR | 6 | 6 | 6 |
| Cord structure of steel cords | | | 2/5 | 2+2 | 2+2 |
| | Core wire strand diameter | mm | 0.20 | 0.32 | 0.32 |
| | Side wire strand diameter | mm | 0.37 | 0.32 | 0.32 |
| Belt rubber composition E' (20°C) | | MPa | 12.9 | 13.1 | 14.9 |
| Durability | | | 100 | 102 | 110 |
| Fuel efficiency | | | 100 | 94 | 97 |

**[Table 2-2]**

| | | | Example 7 | Example 8 | Comparative Example 4 | Comparative Example 5 |
|---|---|---|---|---|---|---|
| Formulation of belt rubber composition | Natural rubber | PHR | 100 | 100 | 100 | 100 |
| | Carbon black | PHR | 60 | 60 | 60 | 60 |
| | Zinc oxide | PHR | 10 | 10 | 10 | 10 |
| | Anti-aging agent | PHR | 1 | 1 | 1 | 1 |
| | Cobalt stearate | PHR | - | 1.6 | - | - |
| | Cobalt boron neodecanoate | PHR | 1 | 0.2 | 1 | 1 |
| | Phenolic resin | PHR | 2 | 1 | - | - |
| | Curing agent | PHR | 4 | 2 | - | - |
| | Vulcanization accelerator | PHR | 0.5 | 0.5 | 0.5 | 0.5 |
| | Sulfur | PHR | 5 | 6 | 6 | 6 |
| Cord structure of steel cords | | | 2+2 | 2+2 | 2 + 2 | 2 + 2 |
| | Core wire strand diameter | mm | 0.32 | 0.32 | 0.28 | 0.35 |
| | Side wire strand diameter | mm | 0.32 | 0.32 | 0.28 | 0.35 |
| Belt rubber composition E' (20°C) | | MPa | 16.2 | 14.6 | 13.1 | 13.1 |
| Durability | | | 115 | 104 | 95 | 105 |
| Fuel efficiency | | | 99 | 97 | 93 | 104 |

As can be seen from Table 2, the tires of Examples 5 to 8 have improved tire durability and fuel efficiency in a well-balanced manner as compared with that of Conventional Example 2.

On the other hand, in Comparative Example 4, the durability of the tire was deteriorated since the wire strand diameters (diameters of the core filament and the sheath filament) were set to be smaller than the range specified in the present invention. In Comparative Example 5, the fuel efficiency of the tire was deteriorated since the wire strand diameters (diameters of the core filament and the sheath filament) were set to be larger than the range specified in the present invention.

### Reference Signs List

- 1: Tread portion
- 2: Sidewall portion
- 3: Bead portion
- 4: Carcass layer
- 7: Belt layer
- 8: Belt cover layer
- 10: Steel cord
- CL: Tire center line

## Claims

1. A pneumatic tire comprising:
a tread portion comprising a belt layer made of a steel cord covered with a rubber composition on an outer side in a tire radial direction of a carcass layer and a belt cover layer made of an organic filament cord covered with a rubber composition on an outer side in the tire radial direction of the belt layer;
the steel cord having a structure in which two sheath filaments having a diameter of 0.32 mm ± 0.01 mm are spirally twisted on an outer circumferential side of two core filaments that are untwisted, having a diameter of 0.32 mm ± 0.01 mm, and
the belt cover layer being disposed so as to cover an entire width of the belt layer.

2. The pneumatic tire according to claim 1, wherein
a ratio (Sb/Sc) of a blended amount of sulfur (Sb) with respect to 100 parts by mass of rubber in a belt rubber composition constituting the belt layer and a blended amount of sulfur (Sc) with respect to 100 parts by mass of rubber in a belt cover rubber composition constituting the belt cover layer is 2.0 to 3.0, and
a ratio (Mb/Mc) of 100% tensile stress (Mb) of the belt rubber composition and 100% tensile stress (Mc) of the belt cover rubber composition is 1.5 to 2.5.

3. The pneumatic tire according to claim 1 or 2, wherein a belt rubber composition constituting the belt layer is made by blending 0.1 to 1.5 parts by mass of cobalt boron neodecanoate and 4.5 to 7.0 parts by mass of sulfur with respect to 100 parts by mass of diene rubber containing natural rubber.

4. The pneumatic tire according to claim 3, wherein
the belt rubber composition is made by blending 0.5 to 3.0 parts by mass of a phenolic resin and 0.5 to 5.0 parts by mass of a curing agent with respect to 100 parts by mass of the diene rubber, and
a dynamic storage modulus E' at 20°C of the belt rubber composition is 13 to 18 MPa.

5. The pneumatic tire according to any one of claims 1 to 4, wherein the pneumatic tire is a light truck tire used under a condition of an air pressure of 350 kPa or more.
